# EUROPEAN PATENT APPLICATION

(11) **EP 3 879 822 A1**
(43) Date of publication of application: **15.09.2021**
(21) Application number: 20163088.6
(22) Date of filing: 13.03.2020
(51) Int. Cl.: H04N 9/31

(54) **METHOD AND SYSTEM FOR PROJECTED CONTENT HANDOVER AMONG A PLURALITY OF PROJECTION MAPPING UNITS**

(71) Applicant: Bayerische Motoren Werke Aktiengesellschaft, 80809 München (DE)
(72) Inventor: EICHHORN, Julian, Menlo Park, CA 94025 (US); MANTOVANI, Francesco, San Jose, CA 95112 (US); GREIN, Daniel, Novato, CA 94947 (US); MOK, Brian, Santa Clara, CA 95050 (US)

(57) **Abstract**

A system and method for projected content handover. A projection mapping system may include a plurality of projection mapping units and a controller. Each projection mapping unit has a specific projection mapping area and may project a content onto a projection surface in a corresponding projection mapping area. Projection mapping areas of neighboring projection mapping units overlap each other. The controller is coupled to each of the plurality of projection mapping units and configured to handover the projected content from a first projection mapping unit to a second projection mapping unit as the projection surface moves from a projection mapping area of the first projection mapping unit to a projection mapping area of the second projection mapping unit. The controller may handover the projected content to a user equipment if the projected surface moves out of a combined projection mapping area of the plurality of projection mapping units.

## Description

### Field

Examples relate to projection mapping, more particularly a method and system for projected content handover among a plurality of projection mapping units.

### Background

Projection mapping uses technology to project objects onto a surface. Using projection mapping, objects can be transformed into a display surface for video projection. The objects onto which the images are projected may not necessarily be a flat surface but any shapes of objects. A projection-based user interface may allow users to remotely control devices through the movement of fingertips over a projected surface, thereby offering a more natural and intuitive way of user interaction.

### Summary

Examples are disclosed for a system for projected content handover. The projection mapping system may include a plurality of projection mapping units and a controller. Each projection mapping unit has a specific projection mapping area and is configured to project a content onto a projection surface in a corresponding projection mapping area. Projection mapping areas of two or more neighboring projection mapping units overlap each other. The controller is coupled to each of the plurality of projection mapping units. The controller may be configured to control each projection mapping unit to steer the projected content (e.g. projected user interface) as the projection surface moves around. The controller may handover the projected content from a first projection mapping unit to a second projection mapping unit as the projection surface moves from a projection mapping area of the first projection mapping unit to a projection mapping area of the second projection mapping unit. With this scheme, a user may continuously use the projected content without interruption while moving around the area.

In some examples, the controller may include a communication unit to connect to a user equipment wirelessly. The controller may be configured to handover the projected content to the user equipment if the projected surface moves out of a combined projection mapping area of the plurality of projection mapping units. The user equipment may be one of a mobile phone, a smart phone, a tablet computer, a laptop computer, or augmented reality (AR) glasses, etc. After the handover to the user equipment, the same content may be displayed on the user equipment.

In another example, when a user who is out of a combined projection mapping area of the system enters the combined projection mapping area while using the user equipment, the controller may handover contents displayed on a display of the user equipment to one of the projection mapping units.

At least one of the plurality of projection mapping units is installed on a gimbal such that the projection mapping unit may rotate or tile to cover a wider area. The projection mapping system may be installed in a vehicle cabin, in a building, or in any other places. The projected content may be projected on one of a human body part, a floor or wall of a building, or an object held by a user.

In accordance with other examples, a method for projected content handover among a plurality of projection mapping units is disclosed. Each projection mapping unit has a specific projection mapping area and projection mapping areas of two or more neighboring projection mapping units overlap each other. A content may be projected from a first projection mapping unit onto a projection surface. The projected content is steered as the projection surface moves around. A handover may be performed from the first projection mapping unit to a second projection mapping unit if the projection surface moves from a projection mapping area of the first projection mapping unit to a projection mapping area of the second projection mapping unit.

In accordance with some examples, a wireless connection may be established to a user equipment and a handover of the projected content may be performed to the user equipment if the projected surface moves out of a combined projection mapping area of the plurality of projection mapping units. The user equipment may be one of a mobile phone, a smart phone, a tablet computer, a laptop computer, or AR glasses, etc.

In other examples, when a user enters a combined projection mapping area of the plurality of projection mapping units while using a user equipment, the content on the user equipment may be handed over to one of the projection mapping units.

### Brief description of the Figures

Some examples of apparatuses and/or methods will be described in the following by way of example only, and with reference to the accompanying figures, in which
Fig. 1 shows an example projection mapping system with a single projection mapping unit;
Figs. 2-7 show a projection mapping system configured to handover a projected content among projection mapping units in accordance with one example;
Fig. 8 shows a projection mapping system installed in a vehicle in accordance with one example;
Fig. 9 shows a projection mapping system installed in a building in accordance with one example; and
Fig. 10 is a flow diagram of an example method for projected content handover among a plurality of projection mapping units.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

In accordance with examples disclosed herein, a plurality of projection mapping units are deployed in a vehicle cabin, in a building, or in any other places, and a projected content (e.g. a projected user interface) may be handed over among the projection mapping units such that a user may be able to use the projected content while moving around the area without interruption.

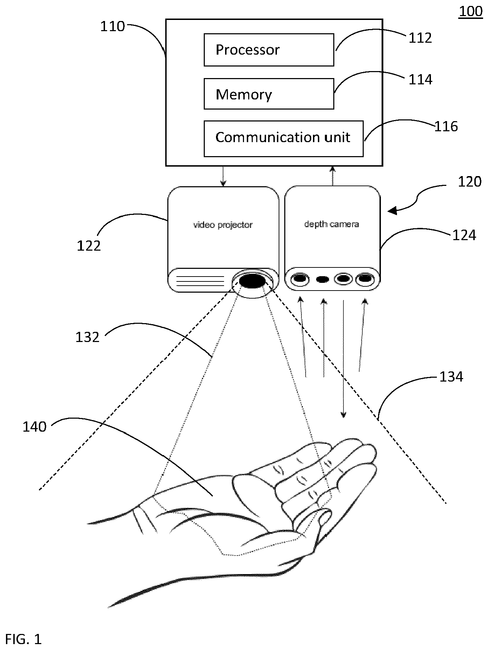

Fig. 1 shows an example projection mapping system 100 with a single projection mapping unit 120. The projection mapping system 100 includes a controller 110 and a projection mapping unit 120. The projection mapping unit 120 includes a projector 122 and a camera 124.

The projector 122 projects a light beam 132 into a projection mapping area 134 of the projection mapping unit (i.e. a field of illumination of the projector 122). The light beam is projected onto a projection surface 140 positioned in the projection mapping area 134 of the projection mapping unit 120. The light beam may be a beam for illumination purposes. Alternatively, the light beam may include information (e.g. image, graphics, texts, or the like). The light beam may be pixel-based or alphanumeric-based. The projection surface 140 may be a human body (e.g. a palm of a user as shown in Fig. 1 or any other human body parts), a piece of paper or a board held by a user, a wall or floor in a building or a vehicle, or any other objects or surfaces in any structure.

The projector 122 projects a certain content onto a projection surface 140. In one example, the projected content may be an image of a user interface (i.e. a projected user interface) such that a user may interact with the system 100 via the projected user interface. In another example, the projected content may be a visual content, such as a movie, a visual sign, etc.

The projector 122 includes a lighting unit for generating the light beam 132. The projector 122 can cause a change in distribution of the light, i.e. can steer the light beam 132 to a specific direction. For example, the projector 122 may include a scanning illumination unit in which a light beam generated by a light source in the projector 122 is deflected in different directions at high speed by a scanning mirror. The light source may be one or more light emitting diodes (LEDs), laser diodes, or the like. Alternatively, the projector 122 may include a pixel-based lighting unit, for example a digital light processor (DLP) projector, a liquid crystal display (LCD) imager, or the like.

The camera 124 is provided for object and/or gesture recognition. The camera 124 captures images in the field of view of the camera 124. The camera 124 may be a depth camera (3D camera) with depth sensing capabilities. The camera 124 may include a processing unit (not shown) which analyzes the captured images and then recognizes objects and/or gestures within the field of view of the camera 124.

The projector 122 and the camera 124 are coupled to a controller 110 (a computer). The image or data captured by the camera 124 may be sent to the controller 110 and the controller 124 may analyze the captured images and recognize objects and/or gestures. As the camera 124 (or alternatively the controller 110) detects a movement of an object in the field of view of the camera 124, the controller 110 may control the projector 122 to steer the light beam 134 such that the projected light beam 134 follows the moving object (i.e. the projected surface 140). This tracking can be automatically performed to ensure that the projected content is projected onto the projection surface 140 (e.g. the palm of the user as shown in Fig. 1) as the projection surface 140 moves around in the projection mapping area 134.

The controller 110 may include, or alternatively be in communication with, a processor 112, a memory 114, and a communication unit 116. The processor 112 may be in communication with the memory 114 via a bus for passing information among components of the controller 110. The memory 114 may include, for example, one or more volatile and/or non-volatile memory modules. The memory 114 may be configured to store information, data, applications, instructions, or the like for enabling the controller 112 to carry out various functions in accordance with examples disclosed herein. The processor 112 is configured to execute instructions stored in the memory 114 for implementing the functionalities disclosed herein.

The communication unit 116 is a device or circuitry configured to receive and/or transmit data from/to a network or other devices. The communication unit 116 may be implemented in hardware or a combination of hardware and software. The communication unit 116 may include devices or circuitries for wired and/or wireless communication. The communication unit 116 may include an antenna for wireless communication. The communication unit 116 may include a modem and/or other hardware/software for supporting communication via cable, digital subscriber line (DSL), universal serial bus (USB), or the like.

The projection mapping unit 120 may project a user interface onto a projection surface 140 and may receive the user's input via the projected user interface. An image of a user interface may be projected onto a projection surface 140 (e.g. a user's body, a floor, a wall, a table). The projected user interface may include a keypad, a keyboard, graphical icons or buttons, or selectable menu items, or the like. The projection mapping unit 120 may project a user interface that simulates a touch screen display. The camera 124 captures the user's gesture and the processor 112 receives an indication of a user input associated with the projected touch screen display (i.e., the projected user interface). The controller 110 receives the user input and may respond or execute instructions in response to the user input.

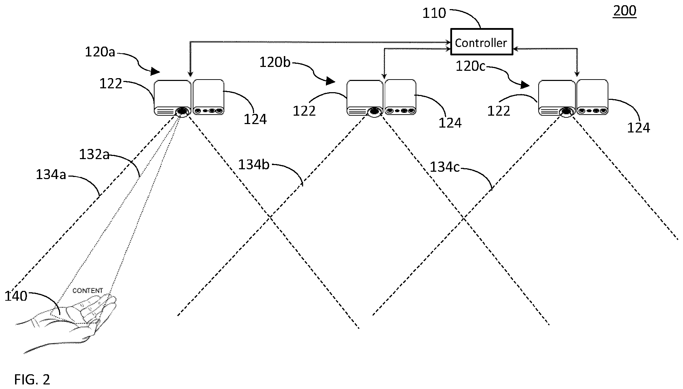

Figs. 2-7 show a projection mapping system 200 configured to handover a projected content among a plurality of projection mapping units in accordance with one example. An example handover process is shown in Figs. 2-7. The projection mapping system 200 may include a plurality of projection mapping units 120a-120c and a controller 110. The controller 110 is coupled to each of the plurality of projection mapping units 120a-120c. It should be noted that Figs. 2-7 show only three projection mapping units 120a-120c as an example, and any number of projection mapping units may be deployed. The projection mapping units may be arrayed in a specific pattern (linear or two-dimensional grid) or may be arranged without any specific pattern.

Each projection mapping unit 120a-120c may include a projector 122 and a camera 124, as disclosed above with reference to Fig. 1. Each projection mapping unit 120a-120c has a specific projection mapping area 134a-134c (i.e. a field of illumination/view). Each projection mapping unit 120a-120c is configured to project a content onto a projection surface 140 in a corresponding projection mapping area 134a-134c. The projection mapping unit 120a-120c may be a fixed unit (i.e. fixed in a specific location with a fixed projection mapping area). Alternatively, or additionally, a projection mapping unit 120a-120c may be installed on a gimbal (or a similar device) such that the projection mapping unit 120a-120c may rotate or tilt to cover more than the field of illumination and view of the projector 122 and camera 124, i.e. the projection mapping unit 120a-120c may have a projection mapping area covering 360 degrees or any other angle (e.g. 270 or 180 degrees).

The projection mapping areas of (two or more) neighboring projection mapping units 120a-120c in the system 200 may overlap each other. For example, as shown in Fig. 2, the projection mapping areas 134a and 134b of the projection mapping units 120a and 120b overlap and the projection mapping areas 134b and 134c of the projection mapping units 120b and 120c overlap. All projection mapping areas of the plurality of projection mapping units 120a-120c in the system 200 constitute a combined projection mapping area of the system 200.

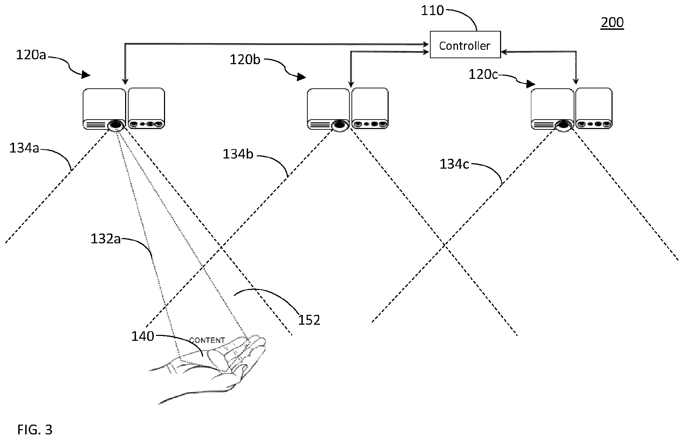

The projection mapping unit 120a-120c may project a content (e.g. an image of a user interface) onto a projection surface 140 (e.g. a palm of a user in this example). As the projection surface 140 moves around (e.g. as the user moves his/her hand around), the movement is detected through the camera 124 and the controller 110 may control the projector 122 to steer the projected light beam 132a-132c onto the moving projection surface 140. As shown in Fig. 3, as the user moves his/her hand to the right side, the movement of hand is tracked and the projected light beam 132a follows the movement of the user's palm so that the projected content is continuously displayed on the user's palm (i.e. the projection surface 140).

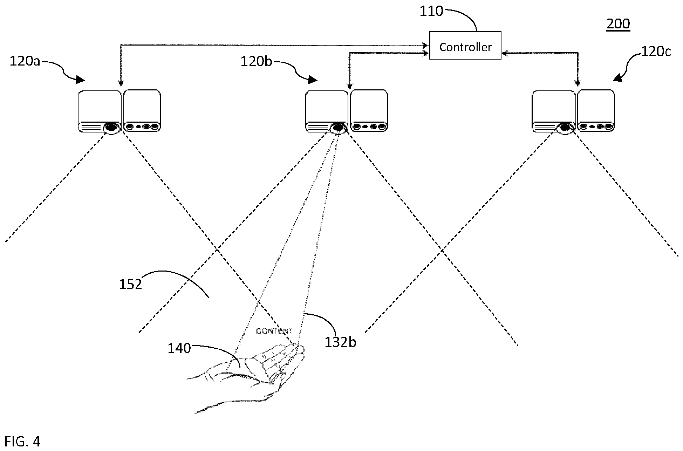

As shown in Fig. 4, as the user moves his/her hand toward the projection mapping unit 120b and the projection surface 140 moves into an overlapping projection mapping area 152 of the projection mapping units 120a and 120b, the controller 110 may initiate and execute a process to handover the projected content from the projection mapping unit 120a to the projection mapping unit 120b. The handover may be triggered if the projected surface 140 crosses a certain threshold in the overlapping projection mapping area 152 between the projection mapping units 120a and 120b (e.g. if the projection surface 140 gets closer to the projection mapping unit 120b more than a certain degree).

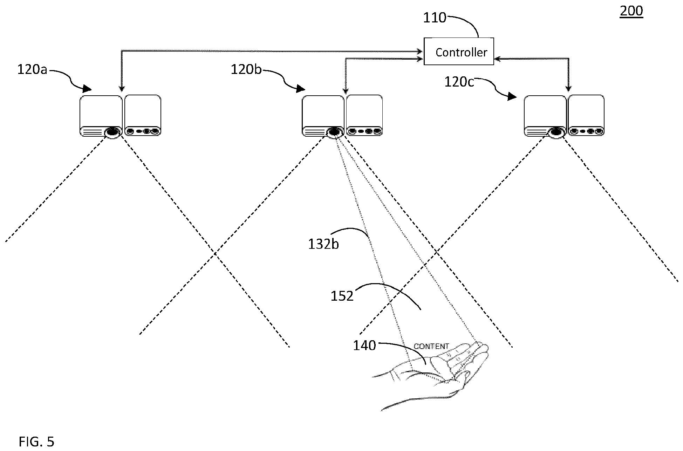

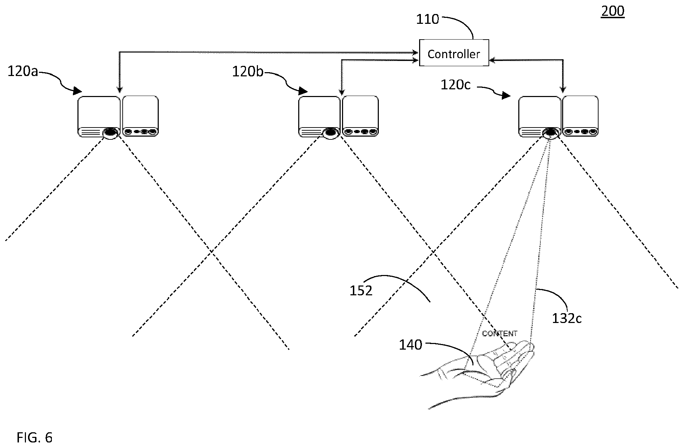

Similar to the projection mapping unit 120a, the projection mapping unit 120b also tracks the movement of the projection surface 140 and steers the projected light beam 132b onto the moving projection surface as the projection surface 140 moves around, as shown in Fig. 5. As the user further moves his/her hand to the right side, the projected content is handed over to the projection mapping unit 120c as shown in Fig. 6.

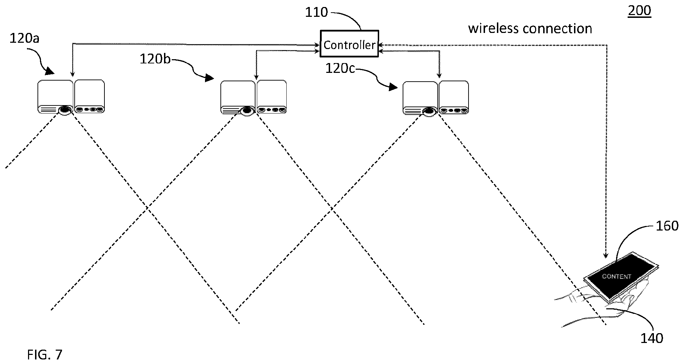

If the projection surface 140 moves out of coverage of any projection mapping units 120a-120c (i.e. out of a combine mapping area of the system) as shown in Fig. 7, the projected content may be handed over to a user equipment 160. The user equipment 160 may be a mobile phone, a smart phone, a tablet computer, a laptop computer, augmented reality (AR) glasses or any types of wearable devices, or the like.

The controller 110 has a communication unit 116 for wireless connection to the user equipment 160. The wireless connection may be established using any wireless communication protocol, such as IEEE 802.11 WLAN, Bluetooth, cellular communication protocol such as Third Generation (3G), Fourth Generation (4G), or Fifth Generation (5G), etc. As the projection surface 140 moves out of the combined projection mapping area of the system 200, the controller 110 establishes a wireless connection to the user equipment 160 and hands over the projected content to the user equipment 160. After the handover, the user equipment 160 may display the same projected content on its display. The actual displayed image on the user equipment 160 may be different from the image of the projected content even though the underlying contents are the same. The handover may be performed within a certain application. The content (the projected content) may be visible on the user equipment when the application is running. Alternatively, a notification may be sent to the user to indicate that the application is now available on the user equipment because the user is leaving the projection mapping area and the user may use the user equipment to run, view, or use the application in response to the notification.

Additionally, the controller 110 may be configured to handover contents displayed on a display of the user equipment 160 to one of the projection mapping units 120a-120c when a user enters a combined projection mapping area of the plurality of projection mapping units 120a-120c. When a user enters a combined projection area of the system 200 while using his/her user equipment 160 (e.g. a device with a screen), the content displayed on the user device may be handed over from the user equipment 160 to one of the projection mapping units 120a-120c in the system 200. The localization of the user equipment 160 relative to the projection mapping area may be determined by using, for example, radio-based tracking (e.g. ultra-wideband (UWB) positioning, Bluetooth, or similar) or optical tracking (e.g. the projection mapping system). The user may be notified that his/her content on the user equipment is now available anywhere in the room/space. The projection mapping may be initiated by the system as soon as the user enters the projection mapping area or with a specific gesture from the user (e.g. opening a hand and showing a palm, or tap a wall, or the like).

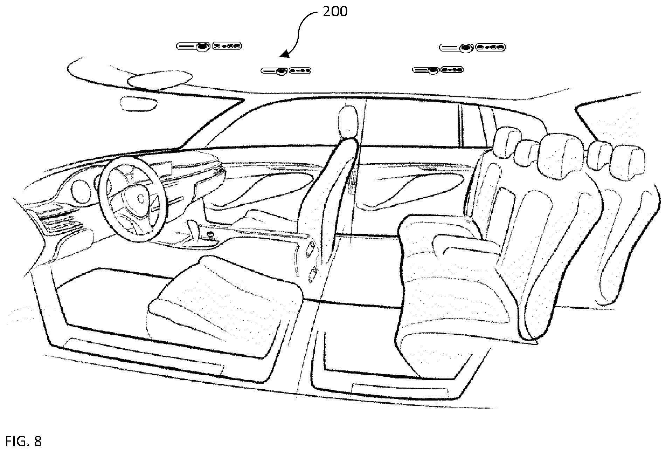

The projection mapping system 200 may be installed in a vehicle, in a building (e.g. in offices, living room, restaurants, cafes, etc.), or in any place. Fig. 8 shows, as an example, a vehicle cabin with the projection mapping system 200 installed in a ceiling of the vehicle cabin. For example, the projection mapping system 200 installed in the ceiling of the vehicle cabin may cover the front and rear rows of the seats and provide a projected user interface to the driver and to the passenger.

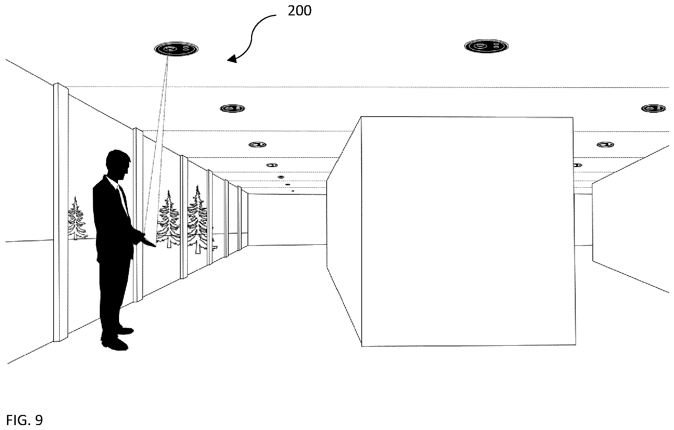

In another example, the projection mapping system may be installed in a building, as illustrated in Fig. 9. The projected mapping system 200 may be installed in a ceiling (or any other place such as a wall, furniture, etc.) inside a building and may project a content (e.g. a user interface) on a projection surface (e.g. a user's body part or any object held by a user, on a floor or wall of the building). As a user enters a building (i.e. a combined projection mapping area of the system 200 installed in the building), the system 200 detects the entrance of the user and activates one of the projection mapping units in the system for the user. As the user moves around in the building, the projected content may be handed over between the projection mapping units as disclosed above.

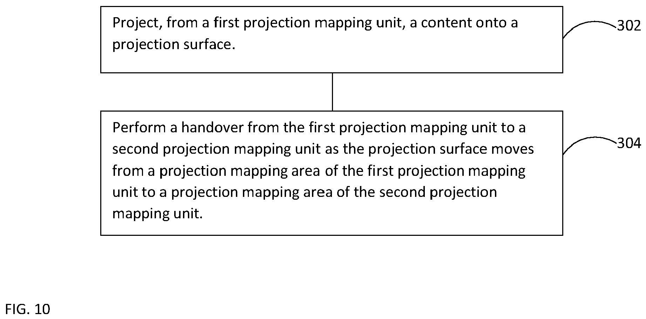

Fig. 10 is a flow diagram of an example method for projected content handover among a plurality of projection mapping units. Each projection mapping unit has a specific projection mapping area and projection mapping areas of two or more neighboring projection mapping units overlap each other. At step 302, a content is projected onto a projection surface from a first projection mapping unit. The projected content is steered as the projection surface moves around. At step 304, a handover is performed from the first projection mapping unit to a second projection mapping unit as the projection surface moves from a projection mapping area of the first projection mapping unit to a projection mapping area of the second projection mapping unit.

In some examples, a wireless connection may be established to a user equipment, and a handover of the projected content may be performed to the user equipment if the projected surface moves out of a combined projection mapping area of the plurality of projection mapping units. In other examples, a handover of a content on the user equipment may be performed to one of the projection mapping units if the user equipment enters the combined projection mapping area of the plurality of projection mapping units. The user equipment may be one of a mobile phone, a smart phone, a tablet computer, a laptop computer, or augmented reality (AR) glasses.

Another example is a computer program having a program code for performing at least one of the methods described herein, when the computer program is executed on a computer, a processor, or a programmable hardware component. Another example is a machine-readable storage including machine readable instructions, when executed, to implement a method or realize an apparatus as described herein. A further example is a machine-readable medium including code, when executed, to cause a machine to perform any of the methods described herein.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A system for projected content handover, comprising:
a plurality of projection mapping units, wherein each projection mapping unit has a specific projection mapping area and is configured to project a content onto a projection surface in a corresponding projection mapping area, wherein projection mapping areas of two or more neighboring projection mapping units overlap each other; and
a controller coupled to each of the plurality of projection mapping units and configured to handover the projected content from a first projection mapping unit to a second projection mapping unit as the projection surface moves from a projection mapping area of the first projection mapping unit to a projection mapping area of the second projection mapping unit.

2. The system of claim 1, wherein the controller includes a communication unit to connect to a user equipment wirelessly, and the controller is configured to handover the projected content to the user equipment as the projected surface moves out of a combined projection mapping area of the plurality of projection mapping units.

3. The system of claim 2, wherein the controller is configured to handover contents displayed on a display of the user equipment to one of the projection mapping units as the user equipment enters a combined projection mapping area of the plurality of projection mapping units.

4. The system of claim 2, wherein the user equipment is one of a mobile phone, a smart phone, a tablet computer, a laptop computer, or augmented reality (AR) glasses.

5. The system of claim 1, wherein at least one of the plurality of projection mapping units is installed on a gimbal.

6. The system of claim 1, wherein the system is installed in a vehicle cabin.

7. The system of claim 1, wherein the system is installed in a building.

8. The system of claim 1, wherein the projected content is projected on one of a human body part, a floor or wall of a building, or an object held by a user.

9. A method for projected content handover among a plurality of projection mapping units, wherein each projection mapping unit has a specific projection mapping area and projection mapping areas of two or more neighboring projection mapping units overlap each other, the method comprising:
projecting, from a first projection mapping unit, a content onto a projection surface; and
performing a handover from the first projection mapping unit to a second projection mapping unit as the projection surface moves from a projection mapping area of the first projection mapping unit to a projection mapping area of the second projection mapping unit.

10. The method of claim 9, further comprising:
establishing a wireless connection to a user equipment; and
performing a handover of the projected content to the user equipment if the projected surface moves out of a combined projection mapping area of the plurality of projection mapping units.

11. The method of claim 10, further comprising:
performing a handover of a content on the user equipment to one of the projection mapping units if the user equipment enters the combined projection mapping area of the plurality of projection mapping units.

12. The method of claim 10, wherein the user equipment is one of a mobile phone, a smart phone, a tablet computer, a laptop computer, or augmented reality (AR) glasses.

13. The method of claim 9, wherein at least one of the plurality of projection mapping units is installed on a gimbal.

14. The method of claim 9, wherein the projection mapping units are installed in a vehicle cabin.

15. The method of claim 9, wherein the projection mapping units are installed in a building.

16. The method of claim 9, wherein the projected content is projected on one of a human body part, a floor or wall of a building, or an object held by a user.

17. A non-transitory machine-readable storage medium including code, when executed, to cause a machine to perform a method of claim 9.
